# EUROPÄISCHE PATENTANMELDUNG

(11) **EP 3 797 576 A1**
(43) Veröffentlichungstag der Anmeldung: **31.03.2021**
(21) Anmeldenummer: 20191049.4
(22) Anmeldetag: 14.08.2020
(51) Int. Cl.: A01D 67/00

(54) **MÄHDRESCHER, VERFAHREN UND ANORDNUNG ZU DESSEN TRANSPORT**

(30) Priorität: 27.09.2019 DE 102019126161
(71) Anmelder: CLAAS Selbstfahrende Erntemaschinen GmbH, 33428 Harsewinkel (DE)
(72) Erfinder: Kersten, Johannes, 49176 Hilter a. TW (DE); Buschhoff, Peter, 48145 Münster (DE); Janssen, Eberhard, 48361 Beelen (DE)
(74) Vertreter: CLAAS Gruppe

(57) **Zusammenfassung**

Ein modularer Mähdrescher (1) ist wenigstens in ein Unterbaumodul (2) und ein Oberbaumodul (3) zerlegbar. Das Unterbaumodul (2) und das Oberbaumodul (3) sind dimensioniert, um in einem Container (32) in Längsrichtung hintereinander Platz zu finden.

## Beschreibung

Die vorliegende Erfindung betrifft einen Mähdrescher und Mittel zu dessen Transport, insbesondere für den Transport vom Hersteller zum Abnehmer.

Moderne Mähdrescher sind aufgrund ihrer großen Abmessungen für preisgünstige Massentransportverfahren nicht geeignet. Daher machen, wenn ein Mähdrescher vom Hersteller zum Abnehmer über lange Strecken, insbesondere auf dem Seeweg, transportiert werden muss, Transportkosten einen nicht zu vernachlässigenden Teil des Preises aus, den der Abnehmer zu entrichten hat.

In DE 37 37 123 A1 wurde im Jahre 1989 die Möglichkeit erwogen, einen Mähdrescher so kompakt zu bauen, dass er als Ganzes in einem Container transportiert werden kann. Der Zwang zur Rationalisierung in der Landwirtschaft hat jedoch dazu geführt, dass die Entwicklung in Richtung immer größerer und leistungsfähigerer Maschinen ging, so dass heutzutage selbst die Mähdrescher, die für Märkte in Niedriglohnländern entwickelt werden, für einen Containertransport nicht in Frage kommen.

Aufgabe der Erfindung ist, einen Mähdrescher zu schaffen, der kostengünstig zu einem Abnehmer transportiert werden kann, bzw. Mittel für einen kostengünstigen Transport bereitzustellen.

Die Aufgabe wird zum einen gelöst, indem bei einem modularen Mähdrescher, der wenigstens in ein Unterbaumodul und ein Oberbaumodul zerlegbar ist, das Unterbaumodul und das Oberbaumodul dimensioniert sind, um in einem Container in Längsrichtung hintereinander Platz zu finden. Durch die Zweiteilung in der Vertikalen kann die maximale vertikale Abmessung des Transportguts soweit reduziert werden, dass eine Unterbringung in existierenden Containertypen in den Bereich des Möglichen rückt.

Um einen kostengünstigen Transport zu ermöglichen, sollten die Abmessungen der Module auf einen gängigen Containertyp nach ISO 668, vorzugsweise einen sogenannten HighCube-Container, abgestimmt sein.

Das Oberbaumodul umfasst vorzugsweise ein Dreschwerk, eine Abscheideeinheit und eine Fahrerkanzel. Ein Antriebsmotor kann ebenfalls zum Oberbaumodul gehören.

Das Unterbaumodul kann ein Fahrwerk und eine Reinigungsstufe umfassen.

Vorzugsweise sollte auch ein Vorsatzgerät des Mähdreschers zusammen mit dem Unterbaumodul und dem Oberbaumodul in dem Container Platz finden.

Die Aufgabe wird ferner gelöst durch eine Anordnung mit einem Container sowie einem Unterbaumodul und einem Oberbaumodul eines modularen Mähdreschers wie oben beschrieben, die in dem Container untergebracht sind.

Ein Vorsatzgerät des Mähdreschers kann in dem Container platzsparend über dem Unterbaumodul positioniert sein.

Das Unterbaumodul und das Oberbaumodul sind im Allgemeinen in Fahrtrichtung des Mähdreschers langgestreckt und sind mit ihrer Längsrichtung in Längsrichtung des Containers ausgerichtet untergebracht. Das Vorsatzgerät ist vorzugsweise mit seiner zur Fahrtrichtung orthogonalen Querrichtung in Längsrichtung des Containers ausgerichtet untergebracht.

Um den Platzbedarf des Unterbaumoduls in Breitenrichtung des Containers zu minimieren bzw. um auch ein Unterbaumodul unterbringen zu können, das die Breite des Containers nur knapp unterschreitet, können Räder getrennt vom Unterbaumodul im Container untergebracht sein.

Die Räder können gegen das Unterbaumodul in Längsrichtung des Containers versetzt untergebracht sein; denkbar ist auch, dass sie jeweils an einer Längsseite des Unterbaumoduls zwischen Radaufhängungen desselben Platz finden.

Die Aufgabe wird ferner gelöst durch ein Verfahren zum Transportieren eines Mähdreschers mit den Schritten
- Platzieren eines Unterbaumoduls und eines Oberbaumoduls in Längsrichtung eines Containers hintereinander in dem Container an einem Ausgangsort,
- Transportieren des Containers an einen Zielort,
- Ausladen des Oberbaumoduls und des Unterbaumoduls aus dem Container am Zielort und Montieren des Oberbaumoduls auf dem Unterbaumodul.

Um eine Qualitäts-und Funktionsprüfung des Mähdreschers vor dem Transport vornehmen zu können, kann es notwendig sein, diesen zunächst vollständig zu montieren. Damit der Mähdrescher anschließend transportiert werden kann, kann dem oben beschriebenen Verfahren ein Schritt des Zerlegens des Mähdreschers in das Unterbaumodul und das Oberbaumodul am Ausgangsort vorangehen.

Weitere Merkmale und Vorteile der Erfindung ergeben sich aus der nachfolgenden Beschreibung von Ausführungsbeispielen unter Bezugnahme auf die Figuren. Es zeigen:
- Fig. 1: eine schematische Seitenansicht eines Mähdreschers und seiner internen Baugruppen;
- Fig. 2: den Mähdrescher aus Fig. 1, unterteilt in ein Unterbau- und ein Oberbaumodul; und
- Fig. 3: den zerlegten und in einem Container verstauten Mähdrescher.

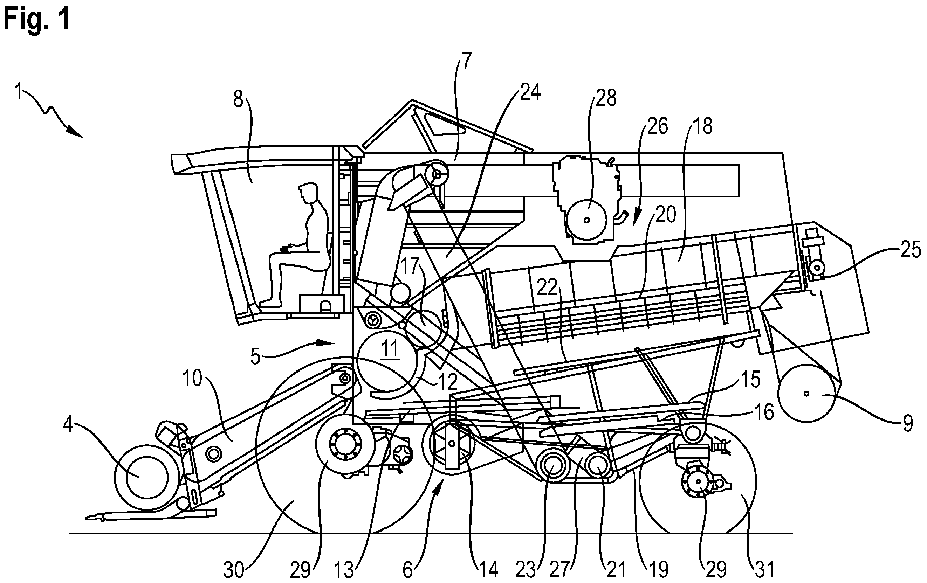

Der in Fig. 1 im Schnitt gezeigte erfindungsgemäße Mähdrescher 1 trägt in seinem Frontbereich ein höhenverstellbares Schneidwerk 4, welches gewachsenes Erntegut auf großer Breite aberntet und in seitlicher Richtung zusammen- und einem Schrägförderorgan 10 zuführt. Über das Schrägförderorgan 10 gelangt das Erntegut in an sich bekannter Weise ins Innere der Karosserie des Mähdreschers 1. In der Darstellung der Fig. 1 sind seitliche Verkleidungsbleche der Karosserie weggelassen, um die diversen Baugruppen in deren Innerem zeigen zu können. Das Erntegut erreicht hier zunächst Dreschorgane 5, die in der Darstellung der Fig. 1 eine Dreschtrommel 11, eine dieser nachgeordnete Wendetrommel 17 und einen Dreschkorb 12 umfassen. Durch Öffnungen des Dreschkorbs 12 hindurch wird aus dem Erntegut ein erster im Wesentlichen aus Körnern, Kurzstroh und Spreu bestehender Erntegutstrom abgeschieden und fällt auf einen Vorbereitungsboden 13. Durch Rüttelbewegungen des Vorbereitungsbodens 13 wird der Erntegutstrom darauf nach hinten, in Richtung einer Reinigungseinrichtung 6, gefördert. Der Vorbereitungsboden 13 ist oberflächlich quer geriffelt, um die Förderung des Erntegutstroms in ansteigender Richtung zu erleichtern.

Der nicht durch den Dreschkorb 12 hindurch getretene Teil des Erntegutstroms wird über die Wendetrommel 17 weiter befördert zu einer Abscheideeinheit 26. Diese umfasst wenigstens einen Axialrotor, der sich in Längsrichtung des Mähdreschers 1 über einen großen Teil von dessen Länge erstreckt. Der Axialrotor ist in seinem oberen Bereich von einer Verkleidung 18 und im unteren Bereich von einem halbzylindrischen Sieb 20 umgeben, über das ein zweiter, im Wesentlichen aus Korn und Ährenbruchstücken bestehender Erntegutstrom abgeschieden wird und auf einen Rücklaufboden 22 gelangt.

Ein Motor 28, der ein Fahrwerk sowie die diversen anderen hier beschriebenen Baugruppen antreibt, ist in der Karosserie über dem Trennrotor untergebracht.

Erntegut, im Wesentlichen Stroh, das an einem rückwärtigen Ende 25 des Axialrotors 18 ausgeworfen wird, gelangt zu einem Verteiler 9 am Heck des Mähdreschers 1, wo es von einem Häcksler zerkleinert und schließlich auf dem Feld verstreut wird.

Auf dem rüttelnd bewegten Rücklaufboden 22 wird der zweite Erntegutstrom vorwärts gefördert und fällt schließlich über eine vordere Kante des Rücklaufbodens 22 auf den Vorbereitungsboden 13, wo er sich mit dem durch den Dreschkorb 12 hindurch getretenen Erntegutstrom vereinigt.

Die Reinigungseinrichtung 6, der der vereinigte Erntegutstrom vom Vorbereitungsboden 13 zugeführt wird, umfasst ein Obersieb 15, ein Untersieb 16 und ein Gebläse 14, das einen über die Siebe 15, 16 streichenden Luftstrom antreibt. Das in dem vom Vorbereitungsboden 13 kommenden Erntegutstrom enthaltene Korn passiert nacheinander die beiden Siebe 15, 16 und erreicht über einen darunter liegenden Boden 19 eine Schneckenfördereinrichtung 23 und einen Elevator 24, der es in einen im Rücken der Fahrerkanzel 8 angeordneten Korntank 7 fördert.

Anteile des Erntegutstroms, die leichter sind als das Korn, werden beim Herabfallen vom Vorbereitungsboden 13 auf das Obersieb 15, vom Obersieb 15 auf das Untersieb 16 oder vom Untersieb 16 auf den Boden 19 vom Luftstrom des Gebläses 14 erfasst und mitgerissen, erreichen den Verteiler 9 und werden über diesen ausgeschieden. Schwere, gröbere Anteile gelangen über eine Überkehr am rückwärtigen Ende der Siebe 15, 16 in einen unterhalb der Siebe quer verlaufenden Graben. Eine in dem Graben rotierende Schnecke 21 räumt das Material seitwärts, zu einem zweiten Elevator 27, der es zurück zu den Dreschorganen 5 befördert.

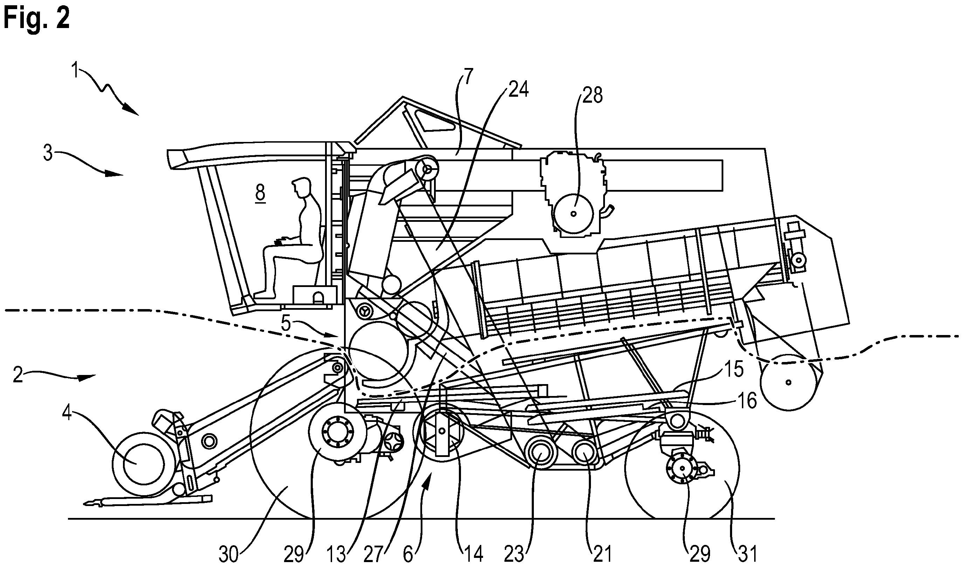

Fig. 2 zeigt schematisch die Aufteilung des Mähdreschers 1. Um den Mähdrescher 1 in ein Unterbaumodul 2 und ein Oberbaumodul 3 zu zerlegen, werden zunächst die Elevatoren 24, 27 abmontiert, die sich zwischen den Modulen 2, 3 erstrecken. Das Unterbaumodul 2 umfasst das Fahrwerk, d.h. ein Chassis mit Aufhängungen 29 für Vorder- und Hinterräder 30, 31, sowie die Reinigungseinrichtung 6 mit, jeweils am Chassis montiert, dem Vorbereitungsboden 13, dem Gebläse 14, dem Obersieb 15 und dem Untersieb 16, und die Schnecken 21, 23.

Da der Motor 28 Teil des Oberbaumoduls 3 ist, wird auch eine nicht gezeigte, den Motor 28 mit dem Fahrwerk verbindende Welle abmontiert oder in einen am Oberbaumodul 3 verbleibenden motorseiteigen Teil und einen am Unterbaumodul 2 verbleibenden fahrwerkseitigen Teil zerlegt.

Das Oberbaumodul 3 umfasst neben dem Motor 28 die Fahrerkanzel 8, den Korntank 7, die Dreschorgane 5 und den Trennrotor. Wenn vorhanden, sollte auch eine Klimaanlage im Oberbaumodul 3 untergebracht sein, damit beim Trennen der Module 2, 3 voneinander keine kältemittelführenden Leitungen zwischen einem Innenwärmetauscher der Fahrerkanzel 8 und einem Außenwärmetauscher unterbrochen werden müssen.

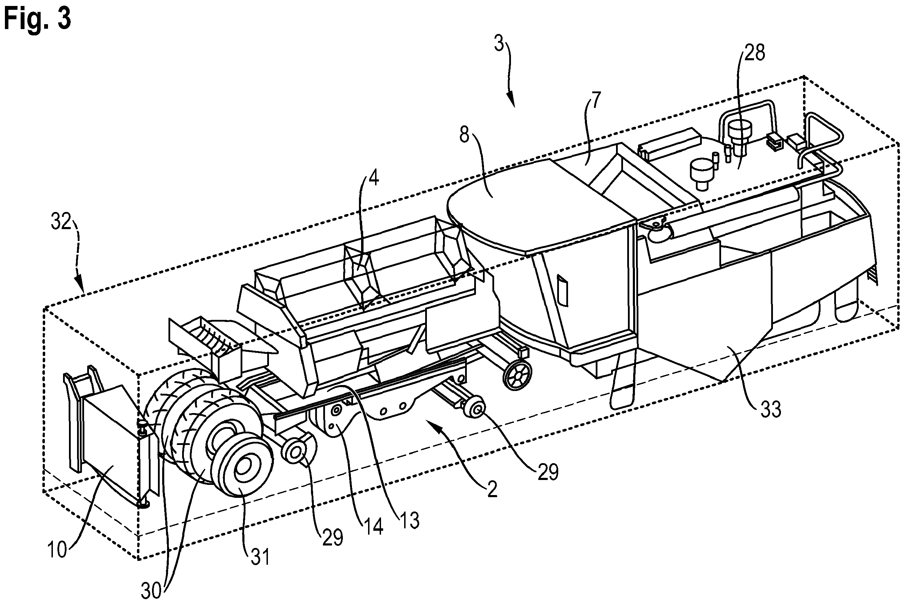

Fig. 3 zeigt den zerlegten und in einem Container 32, z.B einem HighCube-Container von 40 Fuß Länge, untergebrachten Mähdrescher. Zum Fixieren der Komponenten des Mähdreschers 1 im Container verwendete Stützen sind der Übersichtlichkeit halber nicht dargestellt. Das Oberbaumodul 3 ist im Container 32 in geeigneter, nicht dargestellter Weise aufgebockt, um einen Bodenkontakt der Dreschorgane 4 zu verhindern. Da die Fahrerkanzel 8 zum Teil höher liegt als die Dreschorgane 4, bleibt unter ihrem Boden ein Freiraum, der zur Unterbringung anderer Teile genutzt werden kann. Um diesen Freiraum möglichst vielseitig nutzen zu können, ist das Oberbaumodul 3 mit einer Stirnwand des Containers 32 gegenüberliegendem Heck und der Mitte des Containers 32 zugewandter Fahrerkanzel 8 platziert, so dass andere Bauteile teils vor der Fahrerkanzel 8, teils unter diese eingeschoben platzsparend untergebracht werden können.

Hier ist es das Unterbaumodul 2 selbst, von dem ein hinteres Ende unter die Fahrerkanzel 8 eingeschoben ist. Da die Räder 30, 31 vom Unterbaumodul 2 abmontiert sind, kann es im Container 32 mit minimaler Bodenfreiheit untergebracht werden und dementsprechend unproblematisch in den Freiraum unter der Fahrerkanzel 8 eingeschoben werden.

Die vom Unterbaumodul 2 abmontierten Räder 30, 31 finden an der vom Oberbaumodul 3 abgewandten Seite des Unterbaumoduls 2 am Boden des Containers 32 Platz. Alternativ käme in Betracht, den Freiraum unter der Fahrerkanzel 8 zur -eventuell liegenden-Unterbringung der Räder 30, 31 zu nutzen.

Über dem Unterbaumodul 2 ist Platz zur Unterbringung des Schneidwerks 4. Da im montierten Zustand die größte Abmessung des Schneidwerks 4 diejenige in Querrichtung des Mähdreschers 1 ist, ist das Schneidwerk 4 im Container 32 in einer um 90° gedrehten Orientierung untergebracht, so dass seine größte Abmessung in Längsrichtung des Containers 32 verläuft.

Das Schrägförderorgan 10 ist hier, auf die Seite gestellt, zwischen den Rädern 30, 31 und einer zweiten Stirnwand des Containers 32 untergebracht.

Wie man leicht sieht, könnte auch ein Schneidwerk in dem Container 32 Platz finden, das erheblich breiter als das gezeigte ist, z.B. indem die Räder 30, 31 wie bereits erwähnt unter der Fahrerkanzel 8 Platz finden, oder indem sie an den Längsseiten des Unterbaumoduls 2 jeweils zwischen den Radaufhängungen 29 untergebracht werden.

Seitliche Verkleidungsbleche der Karosserie des Mähdreschers können mit beiden Modulen 2, 3 überlappen. Würde man diese am Oberbaumodul 3 belassen, wie in Fig. 3 am Beispiel eines Verkleidungsblechs 33 gezeigt, dann kann sich das Problem ergeben, dass das Oberbaumodul 3 einschließlich der Verkleidungsbleche 33 zu hoch ist, um im Container Platz zu finden. Da die Verkleidungsbleche 33 aber ohnehin entfernt werden müssen, um die Elevatoren 24,27 abmontieren und die Module 2,3 verbindende Befestigungselemente lösen zu können, ist es kein Problem, sie in der Praxis - abweichend von der Darstellung der Fig. 3 - getrennt vom Oberbaumodul 3 im Container 32, vorzugsweise an einer Wand des Containers anliegend, zu verstauen.

### Bezugszeichen

- 1.: Mähdrescher
- 2.: Unterbaumodul
- 3.: Oberbaumodul
- 4.: Schneidwerk
- 5.: Dreschorgane
- 6.: Reinigungseinrichtung
- 7.: Korntank
- 8.: Fahrerkanzel
- 9.: Verteiler
- 10.: Schrägförderorgan
- 11.: Dreschtrommel
- 12.: Dreschkorb
- 13.: Vorbereitungsboden
- 14.: Gebläse
- 15.: Obersieb
- 16.: Untersieb
- 17.: Wendetrommel
- 18.: Verkleidung
- 19.: Boden
- 20.: Sieb
- 21.: Schnecke
- 22.: Rücklaufboden
- 23.: Schneckenfördereinrichtung
- 24.: Elevator
- 25.: rückwärtiges Ende
- 26.: Abscheideeinheit
- 27.: Elevator
- 28.: Motor
- 29.: Aufhängung
- 30.: Vorderrad
- 31.: Hinterrad
- 32.: Container
- 33.: Verkleidungsblech

## Patentansprüche

1. Modularer Mähdrescher (1), der wenigstens in ein Unterbaumodul (2) und ein Oberbaumodul (3) zerlegbar ist, wobei das Unterbaumodul (2) und das Oberbaumodul (3) dimensioniert sind, um in einem Container (32) in Längsrichtung hintereinander Platz zu finden.

2. Modularer Mähdrescher nach Anspruch 1, **dadurch gekennzeichnet, dass** der Container (32) ein Container nach ISO 668 ist.

3. Modularer Mähdrescher nach Anspruch 1 oder 2, **dadurch gekennzeichnet, dass** das Oberbaumodul (3) ein Dreschwerk (5), eine Abscheideeinheit (26) und eine Fahrerkanzel (8) umfasst.

4. Modularer Mähdrescher nach einem der vorhergehenden Ansprüche, **dadurch gekennzeichnet, dass** das Unterbaumodul (2) ein Fahrwerk und eine Reinigungsstufe (6) umfasst.

5. Modularer Mähdrescher nach einem der vorhergehenden Ansprüche, **dadurch gekennzeichnet, dass** das Unterbaumodul (2) und das Oberbaumodul (3) dimensioniert sind, um zusammen mit einem Vorsatzgerät (4) in dem Container (32) Platz zu finden.

6. Anordnung mit einem Container und einem Unterbaumodul (2) und einem Oberbaumodul (3) eines modularen Mähdreschers (1) nach einem der vorhergehenden Ansprüche, die in dem Container (32) untergebracht sind.

7. Anordnung nach Anspruch 6, **dadurch gekennzeichnet, dass** ferner ein Vorsatzgerät (4) in dem Container (32) über dem Unterbaumodul (2) positioniert ist.

8. Anordnung nach Anspruch 7, **dadurch gekennzeichnet, dass** das Unterbaumodul (2) und das Oberbaumodul (3) mit ihrer zur Fahrtrichtung des Mähdreschers (1) parallelen Längsrichtung in Längsrichtung des Containers (32) ausgerichtet untergebracht sind und dass das Vorsatzgerät (4) mit seiner zur Fahrtrichtung orthogonalen Querrichtung in Längsrichtung des Containers (32) ausgerichtet untergebracht ist.

9. Anordnung nach Anspruch 8, **dadurch gekennzeichnet, dass** Räder (30, 31) getrennt vom Unterbaumodul (2) im Container untergebracht sind.

10. Verfahren zum Transportieren eines Mähdreschers mit den Schritten
- Platzieren eines Unterbaumoduls (2) und eines Oberbaumoduls (3) in Längsrichtung eines Containers (32) hintereinander in dem Container (32) an einem Ausgangsort,
- Transportieren des Containers (32) an einen Zielort,
- Ausladen des Oberbaumoduls (3) und des Unterbaumoduls (2) aus dem Container (32) am Zielort und Montieren des Oberbaumoduls (3) auf dem Unterbaumodul (2).

11. Verfahren nach Anspruch 10, ferner mit dem Schritt:
- Zerlegen des Mähdreschers (1) in das Unterbaumodul (2) und das Oberbaumodul (3) am Ausgangsort.
